# EUROPEAN PATENT SPECIFICATION

(11) **EP 1 218 233 B1**
(45) Date of publication and mention of the grant of the patent: **31.03.2004**
(21) Application number: 00960863.9
(22) Date of filing: 20.09.2000
(51) Int. Cl.: B62D 21/15

(54) **VEHICLE WITH MULTIPLE CRASH MODES**
KRAFTFAHRZEUG MIT MEHREREN AUFPRALLSCHUTZVORRICHTUNGEN
VEHICULE COMPORTANT PLUSIEURS MODES DE COLLISION

(30) Priority: 09.10.1999 GB 9923867
(43) Date of publication of application: 03.07.2002
(73) Proprietor: Ford Global Technologies, LLC, Dearborn, MI 48126 (US)
(72) Inventor: WARD, Marcus, John, Scott, Billericay, Essex CM12 0FD (GB)
(74) Representative: Messulam, Alec Moses
(86) International application number: PCT/GB2000/003608
(87) International publication number: WO 2001/026952

(56) References cited:
- EP-A- 0 926 049
- WO-A-98/22327
- US-A- 3 922 002
- US-A- 4 050 537

## Description

### Field of the invention

The present invention relates to vehicle body structures and in particular to body structures arranged for energy absorption in the event of collision with solid obstacles or other vehicles.

### Background of the invention

Passenger cars are required to provide occupant protection in a variety of different frontal impact modes: angular, offset and perpendicular. Careful design of sheet metal body structures provides energy absorption on impact so that decelerations suffered by occupants and intrusions of parts of the vehicle into the passenger compartment are reduced. Impact performance is typically measured by extent of intrusion into the passenger compartment and instrumented dummy values of deceleration when the vehicle collides a) in full frontal impact with a solid block of concrete typically at 30 mph (a perpendicular test); b) with collapsible obstacle offset to one side of the vehicle typically at 40 mph (offset impact test); and c) with a solid barrier set at an angle typically 45 degrees to the vehicle. The perpendicular impact test is designed to simulate the effect of a frontal impact with a solid object. The offset test is designed to simulate an impact with another vehicle travelling in the opposite direction but offset by half a vehicle width. The angled barrier simulates an angled impact with a solid object.

Substantial box section near and offside side rails or frame members extend forwardly from the vehicle body structure either side of the engine. A front cross-member extends between the forward ends of the side rails. The side rails, as well as providing mounting points for engine and front suspension play a major role in frontal impacts. The side rails are designed to collapse on impact absorbing energy and reducing deceleration suffered by occupants. Collapse of the side rails also reduces risk of intrusion of the side rails into the passenger compartment.

It is known from EP 0 788 930 to stiffen vehicle frame members in the event of collision by introducing pressurised gas into a substantially air tight interior. As described this system allows greater stiffness to be achieved for a given weight of frame member.

### Summary of the invention

According to the present invention, there is provided a vehicle comprising a body structure defining a passenger compartment and drivers side and passengers side side rails adapted to collapse in the event of a frontal impact and to absorb energy from the impact thereby reducing deceleration of the passenger compartment; a deceleration sensing means; means for stiffening the respective front side rails by increasing the pressure contained therein; and deployment control means responsive to the deceleration sensing means to differentiate between two or more different impact modes and to selectively pressurise one or both side rails in accordance with impact mode
characterised in that the deceleration sensing means is operative to sense deceleration in the forward and lateral directions and to distinguish between different impact modes on the basis of the sensed magnitudes of forwards and lateral deceleration and in that the deployment control means is operative to actuate the stiffening means depending upon the determined impact mode.

The invention enables resolution of conflicting requirements for side rail design, in that different stiffness and resistance to bending is required for different impact modes.

Head-on impacts create a greater passenger compartment deceleration than offset or angled impacts for a given impact energy but with less intrusion. This allows detection of head-on v. offset based on measured deceleration. The side rail stiffening air bags are deployed when initial decelerations greater than a predetermined threshold are detected. Stiffening is required for higher level decelerations characteristic of perpendicular or angled impacts.

Offset impacts with a deformable barrier generally lead to lower decelerations for the occupants and greater footwell intrusion. In general, offset impacts tend to require a weaker side rail than perpendicular mode impacts of comparable severity.

In this invention therefore the side rail airbags would generally be deployed in a perpendicular mode where a stiffer structure is required but not deployed in an offset mode where a softer structure is required. Sensing the modes would be achieved by monitoring characteristics of the deceleration or by the differential between two sensors mounted on opposite sides of the vehicle, typically one on each side rail or at opposite ends of the front cross-member.

Airbag systems are becoming cheaper as a result of high volume usage. Sensors for airbag systems that are able to sense different crash modes and severity of impact are becoming available. Their primary application is to control less aggressive airbag inflation for less severe collisions and thereby reduce the risk of injury to occupants by airbag deployment.

### Brief description of the drawings

The invention will now be described further, by way of example, with reference to the accompanying drawing, in which:
Figure 1 is a diagrammatic plan view of a passenger car embodying the invention and showing elements of the body structure primarily involved in absorbing the energy of frontal collisions;
Figure 2 is a detailed perspective view of a side rail of a vehicle embodying the invention;
Figure 3 is a diagram of the structure of the invention at an early instant of time in an impact with an offset barrier (offset impact mode);
Figure 4 is a diagram of the structure of the invention at an early instant of time in an impact with a perpendicular barrier (head-on impact mode);
Figure 5 is a diagram of the structure of the invention at an early instant of time in an impact with an angled barrier (angled impact mode);
Figure 6 is graph showing deceleration measured in the passenger area for a vehicle embodying the invention showing typical curves for head-on and offset impact modes; and
Figure 7 is a table showing side rail airbag deployment strategy for different impact modes.

### Detailed description of the preferred embodiments

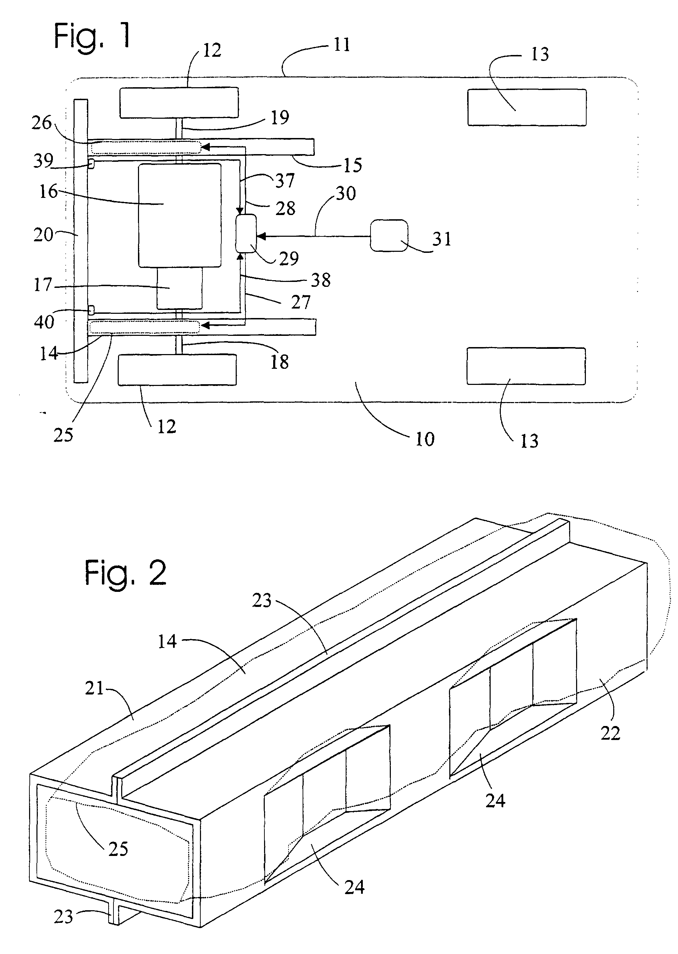

Referring to Figure 1, a front wheel drive passenger car 10 comprises front road wheels 12 and rear road wheels 13 mounted on a body structure shown in outline at 11. The body structure includes near and offside side rails 14 and 15 which extend in a fore and aft direction either side of an engine 16. The engine drives the front wheels 12 through gearbox 17 and drive shafts 18 and 19.

A front cross-member 20 extends between the forward ends of the side rails 14 and 15. The rear ends of the side rails are fixed to the body structure in known manner to distribute loads from the side rails into the main body structure (not shown). The engine and transmission 16, 17 and the front wheel suspension may be mounted on the side rails.

The front cross-member is sufficiently substantial to transfer most of the loads arising from frontal impacts into the side rails.

Each side rail 14, 15 is formed as a box section as shown in Figure 2. Two top hat sections 21 and 22 are welded along seams 23 to create the box section. Indents 24 are formed in both top hat sections to induce controlled, energy absorbing axial collapse in the event of frontal collision.

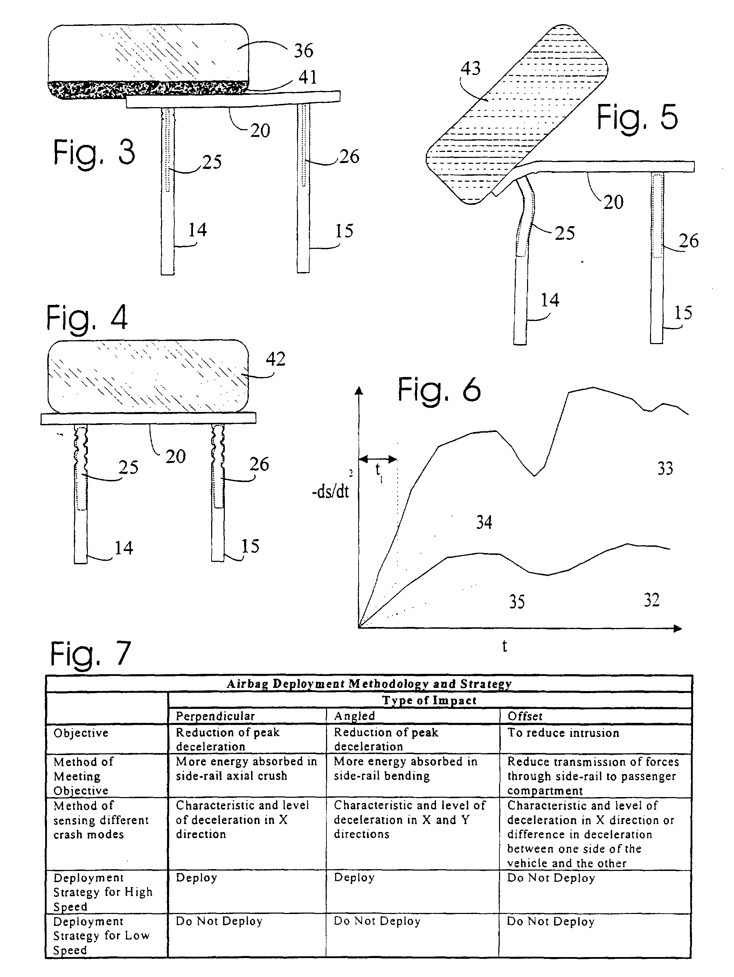

An airbag 25, 26 of elongate substantially cylindrical form is locate in the forward end of each of the side rails 14, 15. The airbags are folded and normally deflated (see Figure 3). The technology used for these airbags is the same as for passenger protection airbags located in front of driver and passenger in most modern passenger cars, but of different shape. An inflation device (not shown) at the rear end of each airbag 25, 26 is connected by a respective trigger input line 27, 28 to an electronic control unit 29 that receives data on lines 30, 37, and 38 from deceleration sensors 31, 39 and 40. Sensor 31 is located in the passenger compartment and is positioned to measure deceleration suffered by the occupants. Possible locations for the sensor 31 are the transmission tunnel or one of the B-pillar of the body structure. Sensors 39 and 40 are mounted on the front cross-member 20 adjacent the forward ends of the side rails 14, 15 to sense the different decelerations suffered by the near and offside forward portions of the vehicle and thereby allow detection of offset and angled frontal impact modes.

The sensors 31, 39, and 40 may be shared with other airbag systems in the vehicle.

When deployed (inflated) each airbag 25, 26 stiffens its respective side rail 14, 15 and either prevents collapse or increases the axial or bending load at which collapse occurs.

Figures 3 shows the basic elements of the front end structure (side rails 14, and 14 and cross-member 20 in the early stage of an impact with a barrier 36 with 'crushable front face 41 offset from the vehicle centre line (offset impact mode). Figure 4 is similar to Figure 3 but shows the early stage of a head-on impact with a solid concrete barrier 42 (perpendicular impact mode). Figure 5 is similar to Figures 3 and 4 but shows an impact with a solid angled barrier 43 (angled impact mode). It can be seen that in the offset and angled impact modes one side of the vehicle is exposed to most of the impact and is called upon to absorb most of the impact energy. In the offset mode the side rail on the impacted side must deform more readily to avoid intrusion. In the angled mode stiffness against bending is required for effective operation. In the perpendicular impact mode shown in Figure 4 both side rails are available to absorb energy because the impact loads are substantially evenly distributed.

Referring now to Figure 7, the table sets out a methodology and strategy for deployment of the side rail airbags 25 and 26. Reduction of intrusion of the side rails into the passenger compartment is a primary objective for offset impacts, whereas reduction of peak decelerations is more important for angled and perpendicular impacts.

For low speed impact of any mode there is no need to deploy the side rail airbags. In high speed perpendicular impacts the airbags are deployed for more energy to be absorbed by side rail axial crush. In high speed angled impacts the airbags (or at least the airbag on the impacted side) are deployed to stiffen the side rail in the impacted side so that the bending which is characteristic of this impact mode absorbs more energy. In high speed offset impacts the airbags are not deployed so that the forces transmitted to the passenger compartment by the side rails is.reduced and risk of intrusion is reduced.

In order to effect deployment of the airbags selectively for different impact modes, the electronic control unit (which may also control other vehicle or power train components) to discriminate between different modes. It will be appreciated that real impacts do not conveniently fall precisely into one or other of the modes described. Discrimination between modes is necessarily on the basis of which of the defined modes is closest to the actual impact on the basis of the sensed deceleration values and characteristics.

Figure 5 shows typical variation of deceleration (-ds/dt²) with time (t) as measured by the sensor 31 for an offset impact (curve 32) and a head-on impact (curve 33). It will be seen that in the initial period t_{I} there is a greater rate of increase of deceleration for a perpendicular impact at a given speed than for an offset impact at the same speed. A threshold level of average initial rate of deceleration D is established (shown in Figure 5 by the slope of the line 34) and impacts showing a greater initial rate of deceleration than D are identified by the ECU 29 as head-on impacts. Those with initial rate of increase of deceleration between a lower threshold E (line 35) and D are identified by the ECU as offset impacts or low severity perpendicular impacts. The lower threshold E is chosen such that below E, the impact will not be sufficiently severe to require deployment of the airbags 14, 15 even for perpendicular impacts. Initial time period t_{I} is chosen to be sufficiently long to allow determination of initial acceleration but sufficiently short to leave time for effective airbag deployment when required.

Angled impacts are detected by higher deceleration sensed at the one of the forward sensors 39, 40 or by detection of lateral (X direction) acceleration greater that a predetermined level.

The ECU 29 sends trigger signals to the airbags 14, 15 only when the initial rate of increase of deceleration is between E and D or if an angled impact is detected from 'the sensor inputs to the electronic control unit. Referring again to Figures 3, 4 and 5, it can be seen that this way of controlling deployment of the airbags ensures maximum stiffness of the side rails in perpendicular impact modes to provide for maximum energy absorption, for stiff side rails for increased resistance to bending in angled modes but avoids stiffening of the side rails to a level that would increase risk of intrusion for offset modes.

Technology for rapidly sensing vehicle impacts and triggering the deployment of airbags is well developed for use in passenger compartment airbag systems and may be carried over into deployment of the side rail airbags of the present invention, see for example US Patents 5,790,404, 5,449,198 and Re. 36,122.

## Claims

1. A vehicle comprising:
a body structure defining a passenger compartment and driver's side and passenger's side side rails (14,15) adapted to collapse in the event of a frontal impact and to absorb energy from the impact thereby reducing deceleration of the passenger compartment;
a deceleration sensing means (31,39,40);
means for stiffening the respective front side rails (14,15) by increasing the pressure contained therein; and
deployment control means (29) responsive to the deceleration sensing means (31,39,40) to differentiate between two or more different impact modes and to selectively stiffen one or both side rails;
**characterised in that**
the deceleration sensing means (31,39,40) is operative to sense deceleration in the forward and lateral directions and to distinguish between different impact modes on the basis of the sensed magnitudes of forwards and lateral deceleration and **in that** the deployment control means is operative to actuate the stiffening means depending upon the determined impact mode.

2. A vehicle as claimed in claim 1 in which the deployment control means (29) is arranged to detect perpendicular impacts above a certain severity and to stiffen both side rails (14,15) in response to such detection.

3. A vehicle as claimed in claim 1 or 2 in which the deceleration sensing means (31,39,40) includes driver's and passenger's side sensors (39,40) each mounted adjacent the forward end of a respective one of the side rails (14,15), the deployment control means (29) being responsive to differences in the signals from the driver's side and passenger side sensors (39,40), to differentiate between angled and offset impacts and to stiffen at least the side rail (14,15) on the impacted side for angled impact modes but not for offset modes.

4. A vehicle as claimed in any one of claims 1 to 3, in which side rail stiffening is accomplished by providing an airbag having a size and shape which when inflated, conforms to the interior of the respective side rail (14,15).

5. A vehicle as claimed in any preceding claim, in which indents (24) are formed in side rails (14,15) to induce controlled, energy absorbing collapse of the side rails in the event of a collision, and in which activation of the stiffening means is operative to inhibit collapse of the indents.

## Patentansprüche

1. Fahrzeug, folgendes aufweisend:
eine Fahrzeugaufbaustruktur, welche einen Fahrgastraum bildet, und fahrer- und beifahrerseitige Seitenholme (14, 15), die ausgelegt sind, sich im Falle eines Frontalaufpralles zusammenstauchen zu lassen, und Energie aus dem Aufprall zu absorbieren, so daß die Verzögerung des Fahrgastraumes reduziert wird;
Verzögerungssensormittel (31, 39, 40);
Mittel zur Versteifung der jeweiligen Frontseitenholme (14, 15) durch Erhöhen des darin enthaltenen Druckes; und
auf die Verzögerungssensormittel (31, 39, 40) ansprechende Mittel (29) zur Auslösesteuerung zur Unterscheidung zwischen zwei oder mehreren unterschiedlichen Aufprallarten und zur selektiven Versteifung eines der beiden oder beider Seitenholme;
**dadurch gekennzeichnet, daß**
die Verzögerungssensormittel (31, 39, 40) derart wirken, daß sie die Verzögerung in Vorwärts- und in Seitenrichtung erfassen, und daß sie zwischen unterschiedlichen Aufprallarten unterscheiden können, ausgehend von der erfaßten Höhe jeweils der Vorwärts- und der Seitenverzögerung, und daß die Auslösesteuermittel derart wirken, daß sie die Versteifungsmittel in Abhängigkeit von der so ermittelten Aufprallart aktivieren.

2. Fahrzeug nach Anspruch 1, worin die Auslösesteuermittel (29) so angeordnet sind, daß sie einen senkrechten Aufprall über einer bestimmten Heftigkeit erfassen und in Reaktion auf eine solche Erfassung beide Seitenholme (14, 15) versteifen.

3. Fahrzeug nach Anspruch 1 oder Anspruch 2, worin die Verzögerungssensormittel (31, 39, 40) einen fahrerseitigen und einen beifahrerseitigen Sensor (39, 40) beinhalten, die jeweils in unmittelbarer Nähe des vorderen Endes eines entsprechenden Holmes der Seitenholme (14, 15) angebracht sind, wobei die Auslösesteuermittel (29) derart auf Unterschiede in den Signalen vom fahrerseitigen und vom beifahrerseitigen Sensor (39, 40) ansprechen, daß sie zwischen einem Schrägaufprall und einem versetzten Aufprall unterscheiden und wenigstens den Seitenholm (14, 15) auf der betroffenen Seite versteifen, wenn der Aufprall ein Schrägaufprall ist, jedoch nicht bei einem versetzten Aufprall.

4. Fahrzeug nach einem der Ansprüche 1 bis 3, worin die Seitenholmversteifung dadurch bewirkt wird, daß ein Luftsack bereitgestellt wird, der, wenn er aufgebläht ist, in seiner Größe und Form dem Innenraum des betreffenden Seitenholmes (14, 15) angepaßt ist.

5. Fahrzeug nach einem beliebigen der vorangehenden Ansprüche, worin Einbuchtungen (24) in den Seitenholmen (14, 15) eingeformt sind, die eine kontrollierte energietilgende Zusammenstauchung der Seitenholme im Falle eines Aufpralles bewirken, und worin die Auslösung der Versteifungsmittel wirksam ist, um ein Eindrücken der Einbuchtungen zu verhindern.

## Revendications

1. Véhicule comprenant :
une structure de carrosserie définissant un habitable et des longerons latéraux du côté conducteur et du côté passager (14, 15) conçue pour se déformer dans l'éventualité d'un impact frontal et pour absorber l'énergie de l'impact en réduisant ainsi la décélération de l'habitacle,
un moyen de détection de décélération (31, 39, 40),
un moyen destiné à raidir les longerons latéraux avant respectifs (14, 15) en augmentant la pression à l'intérieur de ceux-ci, et
un moyen de commande de déploiement (29) répondant au moyen de détection de décélération (31, 39, 40) afin de différencier entre deux ou plusieurs modes d'impact différents et raidir sélectivement un ou les deux longerons latéraux,
**caractérisé en ce que**
le moyen de détection de décélération (31, 39, 40) agit pour détecter la décélération dans les directions vers l'avant et latérale et pour réaliser la distinction entre différents modes d'impact sur la base des amplitudes détectées de la décélération vers l'avant et latérale et **en ce que** le moyen de commande de déploiement agit pour actionner le moyen de raidissement en fonction du mode d'impact déterminé.

2. Véhicule selon la revendication 1, dans lequel le moyen de commande de déploiement (29) est agencé pour détecter des impacts perpendiculaires au-dessus d'une certaine violence et pour raidir les deux longerons latéraux (14, 15) en réponse à une telle détection.

3. Véhicule selon la revendication 1 ou 2, dans lequel le moyen de détection de décélération (31, 39, 40) comprend des détecteurs du côté conducteur et du côté passager (39, 40) chacun étant monté de façon adjacente à l'extrémité avant de l'un respectif des longerons latéraux (14, 15), le moyen de commande de déploiement (29) étant sensible aux différences des signaux provenant des capteurs du côté conducteur et du côté passager (39, 40), afin de différencier entre des impacts en diagonale et décalé et pour raidir au moins le longeron latéral (14, 15) du côté percuté pour des modes d'impact en diagonale mais non pour des modes décalés.

4. Véhicule selon l'une quelconque des revendications 1 à 3, dans lequel le raidissement du longeron latéral est accompli en prévoyant un coussin gonflable de sécurité présentant une taille et une forme qui, lorsqu'il est gonflé le conforment à l'intérieur du longeron latéral respectif (14, 15).

5. Véhicule selon l'une quelconque des revendications précédentes, dans lequel des renfoncements (24) sont formés dans les longerons latéraux (14, 15) afin d'induire une déformation commandée absorbant l'énergie des longerons latéraux en cas de collision, et dans lequel l'activation du moyen de raidissement fonctionne pour interdire l'écrasement des renfoncements.
